# EUROPÄISCHE PATENTSCHRIFT

(11) **EP 0 985 192 B1**
(45) Veröffentlichungstag und Bekanntmachung des Hinweises auf die Patenterteilung: **06.11.2002**
(21) Anmeldenummer: 98929342.8
(22) Anmeldetag: 18.05.1998
(51) Int. Cl.: G06K 19/02

(54) **SPRITZGUSSKARTE MIT DEKORSCHICHT**
INJECTION-MOULDED CARD WITH DECORATIVE LAYER
CARTE MOULEE PAR INJECTION A COUCHE DECORATIVE

(30) Priorität: 20.05.1997 DE 19721058
(43) Veröffentlichungstag der Anmeldung: 15.03.2000
(73) Patentinhaber: Giesecke & Devrient GmbH, 81677 München (DE)
(72) Erfinder: HOPPE, Joachim, D-81377 München (DE); GAUCH, Wolfgang, D-83624 Otterfing (DE)
(74) Vertreter: Klunker . Schmitt-Nilson . Hirsch
(86) Internationale Anmeldenummer: EP9802943
(87) Internationale Veröffentlichungsnummer: WO98052731

(56) Entgegenhaltungen:
- EP-A1- 0 350 179
- EP-A1- 0 825 555
- WO-A1-88/08592

## Beschreibung

Die Erfindung betrifft ein Verfahren zur Herstellung einer Spritzgußkarte mit einer Dekorschicht, insbesondere einer Kreditkarte, Scheckkarte, Bankkarte, Ausweiskarte, Telefonkarte und dergleichen, gemäß dem Oberbegriff des Anspruchs 1 sowie eine Spritzgußkarte, die gemäß diesem Verfahren hergestellt wird.

Es sind bereits eine Reihe von Verfahren bekannt, um eine Spritzgußkarte mit einer Dekorschicht zu versehen. Ein besonders einfaches Verfahren besteht darin, die Dekorschicht drucktechnisch auf einem im Spritzgußverfahren hergestellten Kartenrohling aufzubringen. Nachteilig an dieser Vorgehensweise ist allerdings, daß Einzelkarten bedruckt werden, was relativ aufwendig und teuer ist. Weiterhin ist es sehr schwierig, mit dieser Technik eine hochwertige, d. h. beispielsweise hochglänzende, Kartenoberfläche herzustellen. Ein weiterer Nachteil besteht darin, daß die Dekorschicht als äußerste Schicht aufgebracht ist und dadurch relativ leicht beschädigt werden kann. Dies kann beispielsweise durch Ablackieren der Karte mit einem Klarlack verhindert werden, wodurch das Verfahren jedoch weiter verteuert wird.

Mit dem aus der EP 0 350179 B1 bekannten Verfahren lassen sich die genannten Nachteile bereits weitgehend ausräumen. Gemäß diesem Verfahren wird die Dekorschicht in Form von bedruckten Labels auf den Kartenkörper aufgebracht. Bei diesem Verfahren kann die Karte auf beiden Seiten mit einer Dekorschicht versehen werden, in dem zwei Labels so in eine Gußform eingelegt werden, daß die Labels an den Innenseiten der Gußform anliegen, wobei die bedruckten Seiten der Labels nach innen zeigen. Anschließend wird ein reaktionsspritzgießbares Kunststoffmaterial zwischen die Labels eingespritzt. Nach dem Härten des Kunststoffmaterials kann die fertige Karte, die auf ihren beiden Hauptflächen die Labels trägt, aus der Form genommen werden.

Das in der EP 0 350179 B1 beschriebene Verfahren kann jedoch nur im Zusammenhang mit reaktionsspritzgießbarem Kunststoffmaterial eingesetzt werden, bei dem die auftretenden Drucke und Temperaturen wesentlich unter den Werten herkömmlicher Spritzgußverfahren liegen. Dies führt dazu, daß die Palette der verwendbaren Materialien auf einige wenige reaktionsspritzgießbare Kunststoffe eingeengt ist Würde man die aus der EP 0 350179 B1 bekannten Kartenlabel im Rahmen der herkömmlichen Spritzgußtechnik einsetzen, so würde das drucktechnisch aufgebrachte Dekor während des Spritzgießvorgangs in Folge der hohen auftretenden Temperaturen und Drucke beschädigt werden.

Der Erfindung liegt deshalb die Aufgabe zugrunde, ein Verfahren zur Herstellung einer Spritzgußkarte mit einer qualitativ hochwertigen Dekorschicht sowie eine entsprechend hergestellte Spritzgußkarte anzugeben.

Die Aufgabe wird durch die kennzeichnenden Merkmale des Anspruchs 1 bzw. 10 gelöst. Vorteilhafte Ausgestaltungen der Erfindung sind in den abhängigen Ansprüchen angegeben.

Gemäß einem bevorzugten Ausführungsbeispiel der Erfindung wird in die Spritzgußform wenigstens eine mit einer Dekorschicht versehene Trägerschicht eingebracht. Zum Schutz des Druckbildes vor Beschädigung durch das eingespritzte Spritzgußmaterial ist das Druckbild mit einer Schutzschicht abgedeckt, die einen direkten Kontakt zwischen dem Druckbild und dem Spritzgußmaterial verhindert. Die Trägerschicht wird dazu so in die Spritzgußform eingelegt, daß die Schutzschicht nicht an der Wandung der Spritzgußform anliegt, d. h das Spritzgußmaterial wird gegen die bedruckte Seite der Trägerschicht gespritzt. Auf diese Weise ist es möglich, qualitativ hochwertige Label einfach, beispielsweise im Bogendruck, herzustellen und mit einer Schutzschicht zu versehen und anschließend unter Verwendung der herkömmlichen Spritzgußtechnik zu hochwertigen Karten zu verarbeiten. Das erfindungsgemäße Verfahren hat somit den Vorteil, daß effiziente und kostengünstige Standardtechniken eingesetzt werden und dennoch ein sehr hochwertiges Produkt hergestellt werden kann.

Durch das erfindungsgemäße Verfahren wird erreicht, daß ohne größeren zusätzlichen Aufwand die Karte ein- oder beidseitig mit einem hochwertigen Dekor versehen werden kann, ohne eine Einschränkung in der Wahl der spritzgießbaren Kunststoffe oder bei der Wahl der Farben für das Dekor hinnehmen zu müssen. Durch die Schutzschicht ist auch das Einbringen von Fotos, Hologrammen usw. als Dekorschicht möglich.

Gemäß einer vorteilhaften Ausführungsform der Erfindung besteht die Schutzschicht aus einem Material, das die Haftung des Labels auf dem Spritzgußkörper erhöht Damit kann eine zusätzliche Verbesserung der Haltbarkeit der Karte erreicht werden.

Weiterhin kann die Schutzschicht auch mit Pigmenten oder Farbstoffen versehen sein, um beispielsweise einen gleichmäßigen, farbigen Hintergrund für das Druckbild zur Verfügung zu stellen. Dadurch besteht auch die Möglichkeit Beschriftungseigenschaften, wie beispielsweise Laserungen, zu erzeugen, oder die Schutzschicht selbst grafisch zu gestalten, beispielsweise indem durch Blindprägungen Mattierungseffekte, Logos, Schriftzüge oder ähnliches erzeugt werden.

Schließlich ist es auch möglich, in die Schutzschicht Merkmalsstoffe einzubringen, die im Zusammenhang mit der Echtheitsprüfung der Karte verwendet werden können. Sicherheitsmerkmale, die auf diese Weise in die Karte eingebracht werden, sind vergleichsweise schwer zu fälschen, da sie nicht direkt auf der Oberfläche angeordnet sind.

Insbesondere bei Chip-Karten oder ähnlichen Karten ist es vorteilhaft, die beschichtete Folie bereits mit einer Aussparung zu versehen, in die beim Spritzgießen ein Platzhalter eingefügt wird, der die Form eines später einzubringenden IC-Moduls hat.

Eine weitere vorteilhafte Ausgestaltung des erfindungsgemäßen Verfahrens sieht vor, daß die Trägerschicht aus einer transparenten Folie besteht. Diese Folie wird mit der unbeschichteten Hauptfläche an die Wandung der Spritzgußform angelegt. Das Dekor sowie die Schutzschicht liegen somit in der Spritzgußform nach innen gerichtet. Die Schutzschicht verhindert eine Beeinträchtigung des Dekors durch den Spritzgußvorgang.

Bei Verwendung eines durchsichtigen Spritzgußmaterials kann das Dekor auch auf einer oder beiden Seiten einer Innenschicht der Karte aufgedruckt sein. Das bedruckte Inlett wird auch in diesem Fall mit einer Schutzschicht versehen, die das Dekor beim Spritzgießen vor hohen Temperaturen und Drücken und hoher mechanischer Beanspruchung schützt.

Die Erfindung wird nachstehend anhand der in den Figuren dargestellten Ausführungsformen erläutert. Es zeigen:
- Fig 1: eine Spritzgußkarte mit beidseitig angeordneten Labeln,
- Fig. 2: eine Spritzgußkarte mit beidseitig angeordneten Labeln und einem IC-Modul,
- Fig. 3: eine Spritzgußkarte mit einem bedruckten Inlett.

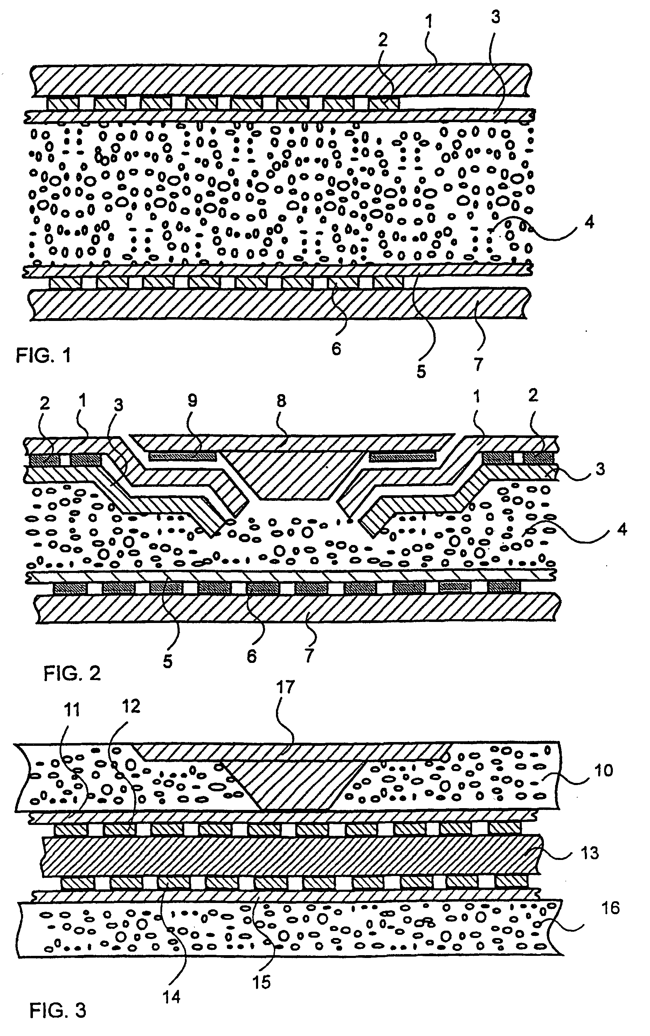

In Figur 1 ist eine Spritzgußkarte, bestehend aus einem spritzgegossenen Kartenkörper 4, der jeweils an beiden Seiten von einem Label 1, 2, 3, bzw. 5, 6, 7 umgeben ist, dargestellt. Die Label bestehen jeweils aus einer transparenten Folie 1 bzw. 7, einem vorzugsweise drucktechnisch auf diese Folie aufgebrachten Dekor 2 bzw. 6 sowie einer Schutzschicht 3 bzw. 5.

Bei der Herstellung einer derartigen Karte werden zunächst die Label in bekannter Weise gefertigt. Hierzu wird in einem externen Fertigungsschritt die Dekorschicht auf die transparente Folie aufgebracht. Zum Schutz der Dekorschicht wird diese anschließend mit einer Schutzschicht überzogen. Diese Schutzschicht soll beim späteren Spritzgußvorgang die Dekorschicht vor zu hohen Drücken bzw. zu hoher thermischer oder mechanischer Belastung schützen, so daß eine Einschränkung bei der Verwendung von Dekorfarben, beispielsweise auf thermostabile Farben, oder bei der Verwendung des Spritzgußmaterials auf reaktionsspritzgießbare Kunststoffe nicht notwendig ist.

Die bedruckten Labels werden vorzugsweise aus größeren Bögen heraus gestanzt. Die auf diese Weise erzeugten Labels werden jeweils so in die Spritzgußform eingelegt, daß die nicht bedruckte Seite der transparenten Folie 1 bzw. 7 an der Spritzgußform anliegt. An der Innenseite liegt folglich das auf der Folie aufgedruckte Dekor 2 bzw. 6, welches durch die Schutzschicht 3 bzw. 5 bedeckt ist. Nach dem Schließen der Spritzgußform wird im folgenden das Spritzgußmaterial gegen die Schutzschicht gespritzt, wobei die Schutzschicht eine Beeinträchtigung des Dekors verhindert

Das für die Schutzschicht verwendete Material ist beispielsweise in Form einer Folie oder einer Lackschicht ausgeführt. Für die Lackschicht eignen sich insbesondere ein- oder mehrkomponentige Siebdruck-Lacke oder UVhärtende Offset-Lacke. Die Schutzschicht kann neben dem Schutz des Dekors noch weitere funktionelle Aufgaben erfüllen. Beispielsweise kann das Material so gewählt werden, daß auch die Haftung des Labels auf dem Spritzgußkörper erhöht wird. Weiterhin kann die Schutzschicht Pigmente bzw. Farbstoffe enthalten, welche als Hintergrundfarbe für das Dekor dienen können oder es können in die Schutzschicht Merkmalsstoffe eingebracht werden, die für eine Echtheitsprüfung verwendet werden.

Die in der Figur 1 dargestellte Spritzgußkarte zeigt ohne Beschränkung der Allgemeinheit beidseitig der Spritzgußschicht angeordnete Label. Es ist ebenso denkbar, Label nur auf einer Seite bzw. nur teilflächig anzuordnen.

Die Figur 2 zeigt ein Ausführungsbeispiel der Erfindung, das ein Chip-Modul enthält Dieses Ausführungsbeispiel entspricht im wesentlichen dem nach Figur 1 und enthält eine erste durchsichtige Folie 1, die mit einem Dekor 2 bedruckt ist, welches durch eine Schutzschicht 3 abgedeckt ist Ebenso ist auf der gegenüberliegenden Seite des Spritzgußkörpers 4 eine zweite durchsichtige, mit einem Dekor 6 bedruckte Folie 7 angeordnet, wobei auch dort das Dekor durch eine Schutzschicht 5 abgedeckt ist. Weiterhin ist bei dem Ausführungsbeispiel nach Figur 2 in die Karte ein Chipmodul 8 eingebracht, welches durch einen Haftvermittler 9 auf der durchsichtigen Folie 1 befestigt ist.

Zur Herstellung einer Karte nach Figur 2 wird das erste Label 1, 2, 3 mit einer Öffnung versehen, die beispielsweise eine geringere Abmessung als das Chipmodul 8 aufweist. In diesem Fall wird beispielsweise in einem ersten Schritt nach Einspritzen der Spritzgußmasse ein Stempel in Form des einzubringenden Chip-Moduls 8 eingedrückt und anschließend wird in den auf diese Weise erzeugten Hohlraum das Modul 8 eingebracht. Der Vermittler 9, vorzugsweise eine Schicht aus heißklebendem Material, welche durch die Restwärme des Spritzgußkartenkörpers 4 bzw. der Folie 9 aktiviert wird, verbindet das Modul 8 mit der Folie 1

Die Öffnung im ersten Label 1,2,3 wird so groß gewählt, daß ein Einreißen des Labels beim Eindrücken des Stempels bzw. beim Einsetzen des Moduls sicher vermieden wird.

Alternativ kann die Öffnung im Label auch so groß gewählt werden, daß sie den äußeren Abmessungen des Chipmoduls entspricht, so daß beim Eindrücken des Stempels bzw. beim Einbringen des Moduls keine Verformung des Labels entsteht In diesem Fall wird das Chip-Modul direkt auf die Spritzgußmasse aufgebracht, so daß auch ein entsprechender Haftvermittler 9 verwendet werden muß.

Es ist ebenso denkbar, daß das Modul bereits beim Spritzgießen in die Form eingebracht wird, so daß die Einbringung des Chip-Moduls in die Karte keinen weiteren Arbeitsschritt benötigt.

In Figur 3 ist beispielhaft eine Spritzgußkarte dargestellt, bei der ein beidseitig mit Dekor 12 bzw. 14 versehenes Inlett 13, das beispielsweise aus Papier oder Folie bestehen kann und zu beiden Seiten mit einer Schutzschicht 11 bzw. 15 abgedeckt ist, von einer Spritzgußmasse 10 bzw. 16 umgeben ist. Im Bereich der oberen Spritzgußschicht 10 ist ein Chipmodul 17 angeordnet.

Zur Herstellung einer Karte nach Figur 3 wird zunächst das Inlett 13 nach bekannten Verfahren hergestellt. Das so hergestellte Inlett wird mit der Dekorschicht versehen. Auch in diesem Fall bestehen eventuelle Einschränkungen hinsichtlich der zu verwendenden Farben nur hinsichtlich des verwendeten Material für das Inlett 13. Auf die Dekorschicht 12 bzw. 14 wird dann eine Schutzschicht 11 bzw. 15 aufgebracht. Vorzugsweise wird das Inlett mit Dekor und Schutzschicht in Bögen hergestellt, aus denen die einzelnen Inletts herausgestanzt werden.

Das Inlett mit Dekor- und Schutzschicht wird mittig in die Spritzgußform eingelegt. Anschließend wird zu beiden Seiten die Spritzgußmasse 10 bzw. 16 in die Form gespritzt. Zum Einlegen des Inletts in die Spritzgußform erhält es vorzugsweise Maße, die größer als die Maße der fertigen Karte sind, damit beim Einlegen in die Form ein Rand bleibt, an dem das Inlett eingespannt werden kann.

Bei der Ausführungsform gemäß Figur 3 wird Spritzgußmaterial verwendet, das zumindest im abgekühlten, ausgehärtetem Zustand durchsichtig ist

Sowohl bei der Ausführungsform gemäß Fig. 2 als auch bei der Ausführungsform gemäß Fig. 3 kann die Spritzgußform über mehrere Formhohlräume verfügen, so daß mehrere Spritzgußkarten gleichzeitig gefertigt werden können. Die Folie 1 bzw. 7 oder das Inlett 13 kann dabei als Band oder Bogen vorliegen und gleichzeitig in mehrere Formhohlräume eingelegt werden. In diesem Fall werden die Einzelkarten beim oder nach dem Herausnehmen aus der Form ausgestanzt Ebenso ist es möglich, in jedem Formhohlraum eine einzelne Folie 1 bzw. 7 oder ein einzelnes Inlett 13 einzulegen.

## Patentansprüche

1. Verfahren zur Herstellung von Spritzgußkarten mit wenigstens einer Dekorschicht (2,6,12,14) ,wobei die Dekorschicht auf einer Trägerschicht (1,7, 13) aufgebracht wird, **dadurch gekennzeichnet, daß**
- die Dekorschicht (2,6,12,14) mit einer Schutzschicht (3,5,11,15) abgedeckt wird,
- die derart beschichtete Trägerschicht (1,7,13) derart in eine Spritzgußform eingelegt wird, daß die Schutzschicht (3,5,11,15) nicht an der Wandung der Spritzgußform anliegt,
- die Spritzgußform geschlossen wird und die Spritzgußmasse (4,10, 16) in die Spritzgußform eingespritzt wird, und
- die Spritzgußkarte aus der Spritzgußform entnommen wird.

2. Verfahren nach Anspruch 1, **dadurch gekennzeichnet, daß** die Schutzschicht (3,5,11,15) aus einem Material besteht, durch das die Haftung des Spritzgußmaterials (4,10,16) an der Trägerschicht (1,7,13) erhöht wird.

3. Verfahren nach Anspruch 1 oder 2, **dadurch gekennzeichnet, daß** die Schutzschicht (3,5,11,15) Pigmente oder Farbstoffe enthält.

4. Verfahren nach einem der Ansprüche 1 bis 3, **dadurch gekennzeichnet, daß** in die Schutzschicht (3,5,11,15) Merkmalsstoffe für eine Echtheitsprüfung eingebracht werden.

5. Verfahren nach einem der Ansprüche bis 4, **dadurch gekennzeichnet, daß** als Schutzschicht (3,5,11,15) wenigstens eine Lackschicht auf die Dekorschicht (2,6,12,14) aufgebracht wird.

6. Verfahren nach einem der Ansprüche 1 bis 5, **dadurch gekennzeichnet, daß** als Schutzschicht (3,5,11,15) eine Folie auf die Dekorschicht (2,6,12,14) aufgebracht wird.

7. Verfahren nach einem der Ansprüche 1 bis 6, **dadurch gekennzeichnet, daß** die Trägerschicht (1,7) aus einer transparenten Folie besteht, die so in eine Spritzgußform eingelegt wird, daß die unbeschichtete Seite der transparenten Folie (1,7) an der Wandung der Spritzgußform anliegt.

8. Verfahren nach Anspruch 7, **dadurch gekennzeichnet, daß** die beschichtete Folie (1,7) eine Aussparung aufweist, in die ein Chip-Modul (8) eingebracht wird.

9. Verfahren nach einem der Ansprüche 1 bis 6, **dadurch gekennzeichnet, daß**
- die Trägerschicht (13) als Karteninlett ausgebildet ist,
- die Dekorschicht (12,14) mit einer durchsichtigen Schutzschicht (11, 15) abgedeckt wird, und
- das derart beschichtete Karteninlett (13) so in die Spritzgußform eingelegt wird, daß wenigstens eine Hauptfläche des Karteninletts (13) nicht an der Wandung der Spritzgußform anliegt.

10. Spritzgußkarte, bestehend aus einem Spritzgußkörper (4,10,16) und wenigstens einer Trägerschicht (1, 7,13), auf die eine Dekorschicht (2,6,12, 14) aufgebrächt ist, **dadurch gekennzeichnet, daß** die Dekorschicht (2,6,12, 14) mit einer Schutzschicht (3,5,11,15) abgedeckt ist und die Trägerschicht (1,7,13) so auf dem Spritzgußkörper (4,10,16) angeordnet ist, daß die Schutzschicht dem Spritzgußkörper direkt benachbart ist.

11. Spritzgußkarte nach Anspruch 10, **dadurch gekennzeichnet, daß** die Trägerschicht (1,7) aus transparentem Material besteht, welches an einer oder beiden Hauptflächen des Spritzgußkörpers (4) angeordnet ist

12. Spritzgußkarte nach Anspruch 10, **dadurch gekennzeichnet, daß** die Trägerschicht (13) als Karteninlett ausgebildet ist, welches ein oder beidseitig mit einer Dekorschicht versehen ist und bei welcher der Spritzgußkörper (10,16) transparent ist.

## Claims

1. A method for producing injection-molded cards with at least one decorative layer (2, 6, 12, 14), the decorative layer being applied to a carrier layer (1, 7, 13), **characterized in that**
- the decorative layer (2, 6, 12, 14) is covered with a protective layer (3, 5, 11, 15),
- the thus coated carrier layer (1, 7, 13) is inserted into an injection mold in such a way that the protective layer (3, 5, 11, 15) does not lie against the wall of the injection mold,
- the injection mold is closed and the injection molding compound (4, 10, 16) is injected into the injection mold, and
- the injection-molded card is removed from the injection mold.

2. A method according to claim 1, **characterized in that** the protective layer (3, 5, 11, 15) consists of a material which increases the adhesion of the injection molding material (4, 10, 16) to the carrier layer (1, 7, 13).

3. A method according to claim 1 or 2, **characterized in that** the protective layer (3, 5, 11, 15) contains pigments or dyes.

4. A method according to any of claims 1 to 3, **characterized in that** feature substances for authenticity testing are incorporated in the protective layer (3, 5, 11, 15).

5. A method according to any of claims 1 to 4, **characterized in that** at least one lacquer layer is applied to the decorative layer (2, 6, 12, 14) as a protective layer (3, 5, 11, 15).

6. A method according to any of claims 1 to 5, **characterized in that** a foil is applied to the decorative layer (2, 6, 12, 14) as a protective layer (3, 5, 11, 15).

7. A method according to any of claims 1 to 6, **characterized in that** the carrier layer (1, 7) consists of a transparent foil which is inserted into an injection mold in such a way that the uncoated side of the transparent foil (1, 7) lies against the wall of the injection mold.

8. A method according to claim 7, **characterized in that** the coated foil (1, 7) has a gap into which a chip module (8) is inserted.

9. A method according to any of claims 1 to 6, **characterized in that**
- the carrier layer (13) is formed as a card inlay,
- the decorative layer (12, 14) is covered with a transparent protective layer (11, 15), and
- the thus coated card inlay (13) is inserted into the injection mold in such a way that at least one main face of the card inlay (13) does not lie against the wall of the injection mold.

10. An injection-molded card consisting of an injection-molded body (4, 10, 16) and at least one carrier layer (1, 7, 13) to which a decorative layer (2, 6, 12, 14) is applied, **characterized in that** the decorative layer (2, 6, 12, 14) is covered with a protective layer (3, 5, 11, 15), and the carrier layer (1, 7, 13) is disposed on the injection-molded body (4, 10, 16) in such a way that the protective layer is directly adjacent to the injection-molded body.

11. An injection-molded card according to claim 10, **characterized in that** the carrier layer (1, 7) consists of transparent material which is disposed on one or both main faces of the injection-molded body (4).

12. An injection-molded card according to claim 10, **characterized in that** the carrier layer (13) is formed as a card inlay which is provided on one or both sides with a decorative layer and wherein the injection-molded body (10, 16) is transparent.

## Revendications

1. Procédé de fabrication de cartes par moulage d'injection avec au moins une couche décorative (2, 6, 12, 14), la couche décorative étant appliquée sur une couche de support (1, 7, 13), **caractérisé en ce que**
la couche décorative (2, 6, 12, 14) est recouverte d'une couche de protection (3, 5, 11, 15),
les couches de support (1,7,13) ainsi revêtues sont placées dans un moule pour moulage par injection de telle façon que la couche de protection (3, 5, 11, 15) ne soit pas en appui contre la paroi du moule de moulage par injection,
le moule pour moulage par injection est fermé, et une masse d'injection (4,10,16) est injectée dans le moule pour moulage par injection et,
la carte moulée par injection est retirée du moule à moulage par injection.

2. Procédé selon la revendication 1, **caractérisé en ce que** la couche de protection (3, 5, 11, 15) est constituée d'un matériau qui augmente l'adhésion du matériau de moulage par injection (4, 10, 16) à la couche de support (1, 7, 13).

3. Procédé selon la revendication 1 ou 2, **caractérisé en ce que** la couche de protection (3, 5, 11, 15) contient des pigments ou des colorants.

4. Procédé selon l'une des revendications 1 à 3, **caractérisé en ce que** des substances caractérisantes permettant une vérification de l'authenticité sont introduites dans la couche de protection (3, 5, 11, 15).

5. Procédé selon l'une des revendications 1 à 4, **caractérisé en ce que** au moins une couche de vernis est appliquée à la couche décorative (2, 6, 12, 14) en tant que couche de protection (3, 5, 11, 15).

6. Procédé selon l'une des revendications 1 à 5, **caractérisé en ce qu'**une feuille mince est appliquée à la couche décorative (2, 6, 12, 14) en tant que couche de protection (3, 5, 11, 15).

7. Procédé selon l'une des revendications 1 à 6, **caractérisé en ce que** la couche de support (1,7) est constituée d'une feuille transparente qui est introduite dans un moule pour moulage par injection de telle sorte que le côté non revêtu de la feuille transparente (1,7) soit en appui contre la paroi du moule pour moulage par injection.

8. Procédé selon la revendication 7, **caractérisé en ce que** la feuille revêtue (1,7) présente un évidement dans lequel un module de circuit intégré (8) est introduit.

9. Procédé selon l'une des revendications 1 à 6, **caractérisé en ce que**
la couche de support (13) a la forme d'un insert pour carte,
la couche décorative (12,14) est revêtue d'une couche de protection transparente (11,15) et
l'insert (13) pour carte ainsi revêtu est placé dans le moule pour moulage par injection de sorte qu'au moins une face principale de l'insert pour carte (13) ne soit pas en appui contre la paroi du moule pour moulage par injection.

10. Carte moulée par injection, constituée d'un corps moulé par injection (4,10,16) et d'au moins une couche de support (1,7,13), sur laquelle la couche décorative (2,6,12,14) est appliquée, **caractérisé en ce que** la couche décorative (2,6,12,14) est revêtue d'une couche de protection (3,5,11,15) et la couche de support (1,7,13) est agencée sur le corps moulé par injection (4,10,16) de sorte que la couche de protection soit directement adjacente au corps moulé par injection.

11. Carte moulée par injection selon la revendication 10, **caractérisée en ce que** la couche de support (1,7) est constituée d'un matériau transparent qui est agencé sur l'une des faces principales ou sur les deux faces principales, du corps moulé par injection (4).

12. Carte moulée par injection selon la revendication 10 **caractérisée en ce que** la couche de support (13) est réalisée sous la forme d'un insert pour carte, qui est muni sur un côté ou sur les deux côtés d'une couche décorative et dans laquelle le corps moulé par injection (10,16) est transparent.
